# EUROPÄISCHE PATENTANMELDUNG

(11) **EP 3 789 643 A2**
(43) Veröffentlichungstag der Anmeldung: **10.03.2021**
(21) Anmeldenummer: 20195349.4
(22) Anmeldetag: 09.09.2020
(51) Int. Cl.: F16K 31/04

(54) **STELLANTRIEBE UND VERWENDUNG EINES TOLERANZRINGS UND/ODER EINER TOLERANZHÜLSE**

(30) Priorität: 09.09.2019 DE 102019124148
(71) Anmelder: AUMA Riester GmbH & Co. KG, 79379 Müllheim (DE)
(72) Erfinder: ACHINGER, Robert, 90491 Nürnberg (DE); MORLANG, Rudolf, 78052 Villingen-Schwenningen (DE)
(74) Vertreter: Mertzlufft-Paufler, Cornelius

(57) **Zusammenfassung**

Die Erfindung befasst sich mit Verbesserungen auf dem technischen Gebiet der Stellantriebe. Hierzu wird unter anderem der Stellantrieb (1) vorgeschlagen, dessen Stellantriebsgehäuse (2) zumindest eine Stufe (4) aufweist, an der wenigstens eine Funktionsfläche (5) mit wenigstens einem Zugang (6, 7) in das Stellantriebsgehäuse (2) ausgebildet ist (vgl. Fig. 1).

## Beschreibung

Die Erfindung betrifft Stellantriebe, die in verschiedensten Ausführungsformen aus dem Stand der Technik und der Praxis vorbekannt sind.

Stellantriebe umfassen ein Stellantriebsgehäuse, in dem ein Stellantriebsmotor angeordnet ist, und werden beispielweise dazu verwendet, Armaturen und/oder Ventile zu betätigen.

Es gibt Anwendungsfälle, beispielsweise im Schiffsbau oder auch in der Anlagentechnik, bei denen eine Vielzahl derartiger Stellantriebe auf vergleichsweise geringem Bauraum installiert werden müssen.

Aufgabe der Erfindung ist es, einen Stellantrieb der eingangs genannten Art zu schaffen, der einfach auch auf vergleichsweise kleinem Bauraum installiert zu werden.

Zur Lösung dieser Aufgabe wird ein Stellantrieb mit den Merkmalen des ersten unabhängigen, auf einen solchen Stellantrieb gerichteten Anspruchs geschaffen. Zur Lösung der Aufgabe wird somit insbesondere ein Stellantrieb mit einem Stellantriebsgehäuse vorgeschlagen, in dem ein Stellantriebsmotor angeordnet ist, wobei das Stellantriebsgehäuse zumindest eine Stufe mit zumindest einer Funktionsfläche aufweist, an der zumindest ein Zugang in das Stellantriebsgehäuse ausbildbar und/oder ausgebildet ist.

Durch die Stufe an dem Gehäuse wird eine Funktionsfläche geschaffen, die beispielsweise an einer frei zugänglichen Vorderseite oder Rückseite des Stellantriebsgehäuses angeordnet sein kann. Die Funktionsfläche kann zur Anbringung von Stellungsanzeigen, für elektrische Anschlüsse in das Gehäuse und/oder beispielsweise auch zum Einbringen einer Endanschlagschraube verwendet werden, die den Stellweg des Antriebs und/oder eines mit dem Stellantrieb betätigten Ventils oder einer Armatur begrenzt.

So kann der erfindungsgemäße Stellantrieb in dem für ihn vorgesehenen Bauraum so platziert werden, dass seitliche Flächen des Stellantriebsgehäuses nicht zugänglich sein müssen. Auf diese Weise ist es möglich, beispielsweise mehrere derartige Stellantriebe eng nebeneinander anzuordnen, um vorhandenen Bauraum bestmöglich auszunutzen.

Das Stellantriebsgehäuse kann zumindest zwei Gehäuseteile umfassen, die zur Ausbildung der Stufe versetzt zueinander angeordnet sind. Die zumindest zwei Gehäuseteile können beispielsweise quer zu einer Rotationssachse des Stellantriebsmotors versetzt zueinander angeordnet sein. Der Versatz der zumindest zwei Gehäuseteile zueinander kann ursächlich für die Ausbildung der Stufe und damit ursächlich für die Ausbildung der Funktionsfläche sein.

Bei einer Ausführungsform des Stellantriebs kann die an der Stufe ausgebildete und/oder durch den Versatz bedingte zumindest eine Funktionsfläche rechtwinklig zu einer Richtung des Versatzes ausgerichtet sein. Ein Vektor, mit dem die Richtung des Versatzes beschrieben werden kann, steht hierbei rechtwinklig auf der Funktionsfläche.

Bei einer anderen Ausführungsform des Stellantriebs kann vorgesehen sein, dass zumindest eine durch den Versatz bedingte Funktionsfläche des Stellantriebs in Richtung des Versatzes ausgerichtet ist. Hierbei kann ein Vektor, mit dem die Richtung des Versatzes beschrieben werden kann, in etwa oder zum Teil innerhalb der Funktionsfläche liegen.

Zur Lösung der Aufgabe wird auch ein Stellantrieb vorgeschlagen, der die Mittel und Merkmale des zweiten unabhängigen, auf einen solchen gerichteten Anspruchs aufweist. Insbesondere wird somit ein Stellantrieb vorgeschlagen, der ein Handrad aufweist, das, vorzugsweise exzentrisch, an einer, beispielsweise einer der zumindest einen bereits zuvor erwähnten Funktionsfläche, eines, beispielsweise des bereits zuvor erwähnten, Stellantriebsgehäuses angeordnet ist. Das Handrad weist dabei einen Durchmesser auf, der höchstens so groß, vorzugsweise kleiner als, ein größter messbarer Abstand zwischen zwei sich gegenüberliegenden Außenseiten ist, zwischen denen ein Drehzentrum des Handrads angeordnet ist.

Dabei kann das Handrad insbesondere eine der zuvor erwähnten Außenseiten des Stellantriebsgehäuses des Stellantriebs seitlich überragen. Auf diese Weise ist es möglich, mehrere solcher Stellantriebe eng nebeneinander zu positionieren, da auch bei dieser Ausführungsform eines Stellantriebs seitliche Gehäuseflächen frei von Funktionselementen, beispielsweise frei von einem Handrad bleiben können. Somit wird ein Stellantrieb geschaffen, der sich besonders für die Integration in vergleichsweise kleinem Bauraum eignet.

Das Handrad kann beispielsweise an einer Seite, insbesondere an einer Stirnseite einer, zum Beispiel der bereits zuvor erwähnten, Stufe des Stellantriebsgehäuses angeordnet sein.

Bei jedem der zuvor beschriebenen Stellantriebe kann der Stellantriebsmotor in einem von zumindest zwei Gehäuseteilen des Stellantriebsgehäuses angeordnet sein. Eine Stellantriebsausgangswelle kann an einem dazu versetzten Gehäuseteil des Stellantriebsgehäuses angeordnet sein. Der Stellantriebsmotor kann über ein Stellantriebsgetriebe mit der Stellantriebsausgangswelle verbunden sein. Dabei kann sich das Stellantriebsgetriebe von dem Gehäuseteil mit dem Stellantriebsmotor bis in den Gehäuseteil mit der Stellantriebsausgangswelle erstrecken. Das Stellantriebsgetriebe erlaubt somit die räumlich voneinander beabstandete Positionierung des Stellantriebsmotors in dem einen Gehäuseteil von der Stellantriebsausgangswelle, die in dem anderen Gehäuseteil angeordnet ist.

Bei einer Ausführungsform des Stellantriebs ist vorgesehen, dass zumindest eine Funktionsfläche der zumindest einen bereits zuvor erwähnten Funktionsfläche zwischen einer Oberseite und einer Unterseite des Stellantriebsgehäuses ausgebildet ist.

Bei einer Ausführungsform des Stellantriebs kann eine Funktionsfläche der zumindest einen Funktionsfläche an einer Seite des Stellantriebsgehäuses ausgebildet sein, die einer Oberseite des Stellantriebsgehäuses abgewandt ist. An dieser Funktionsfläche kann eine Durchführung für einen elektrischen Anschluss in das Stellantriebsgehäuse ausgebildet sein.

Bei einer Ausführungsform des Stellantriebs ist eine Funktionsfläche der zumindest einen Funktionsfläche an einer Seite des Stellantriebsgehäuses ausgebildet, die einer Unterseite des Stellantriebsgehäuses abgewandt ist. Bei einer Ausführungsform des Stellantriebs kann eine Funktionsfläche der zumindest einen Funktionsfläche an einer Seite des Gehäuses angeordnet sein, die einer Seite, aus der eine, beispielsweise die bereits zuvor erwähnte, Stellantriebsausgangswelle austritt, abgewandt ist.

Bei einer Ausführungsform des Stellantriebs kann eine Funktionsfläche der zumindest einen Funktionsfläche in einer axialen Verlängerung der Stellantriebsausgangswelle und vorzugsweise mit wenigstens einer Anzeige und/oder wenigstens einer Endanschlagschraube und/oder wenigstens ein Bedienelement ausgebildet sein. Die zuvor bereits erwähnte Endanschlagschraube kann auch als Endlagenstellschraube bezeichnet werden. Bei einer Ausführungsform des Stellantriebs kann das Stellantriebsgehäuse auch eine Funktionsfläche in einer axialen Verlängerung des Stellantriebsmotors aufweisen.

Für manche Anwendungen ist es wünschenswert, den Stellantrieb per Bluetooth anzusteuern. Oftmals ist es jedoch erforderlich, den Stellantrieb explosionsgeschützt auszuführen, was zur Folge hat, dass sein Stellantriebsgehäuse möglichst wenige Durchbrüche aufweisen darf. Ferner ist es bekannt, Statusmeldungen, die den Stellantrieb betreffen, über Displays auszugeben. Diese Displays werden bei den aus der Praxis vorbekannten Stellantrieben hinter relativ großen Öffnungen angeordnet. Um die Explosionschutzanforderungen, die an Stellantriebsgehäuse solcher Stellantriebe gestellt werden, erfüllen zu können, müssen die relativ großen Öffnungen mit massiven und dementsprechend teuren Sichtscheiben verschlossen werden.

Aufgabe eines weiteren Erfindungsaspektes ist es daher, einen Stellantrieb, insbesondere einen solchen, wie er bereits zuvor beschrieben wurde, zu schaffen, der mittels Bluetooth angesteuert werden kann und gleichzeitig einen vergleichsweise einfach zu realisierenden Explosionsschutz aufweist.

Zur Lösung der Aufgabe wird ein Stellantrieb mit den Merkmalen des dritten unabhängigen, auf einen derartigen Stellantrieb gerichteten Anspruchs vorgeschlagen. Insbesondere wird zur Lösung der Aufgabe somit ein Stellantrieb vorgeschlagen, der ein Stellantriebsgehäuse mit zumindest einem Kommunikationsloch als Durchtrittsöffnung für ein Bluetooth-Signal aus dem Stellantriebsgehäuse aufweist, wobei das Kommunikationsloch einen maximalen Durchmesser von 30 mm aufweist und mit einer Sichtscheibe verschlossen ist, und wobei in dem Stellantriebsgehäuse eine LED angeordnet ist, deren LED-Signal durch die Sichtscheibe hindurch für einen Anwender des Stellantriebs hindurch wahrnehmbar ist.

Bei einer Ausführungsform dieses Stellantriebs kann das Kommunikationsloch einen maximalen Durchmesser von 25 mm aufweisen.

Es wurde festgestellt, dass ein Kommunikationsloch mit einem maximalen Durchmesser von 30 mm, vorzugsweise von max. 25 mm ausreichend groß ist, damit Bluetooth-Signale das Kommunikationsloch in zufriedenstellendem Maße passieren können. Zwar ist das Kommunikationsloch als Durchtrittsöffnung für Bluetooth-Signale vergleichsweise klein, sodass ein Display, wie es aus der Praxis vorbekannt ist, möglicherweise schwer oder kaum zu integrieren ist, jedoch wird dies durch die Verwendung zumindest einer LED zur Statusanzeige kompensiert.

Ferner zeichnet sich der erfindungsgemäße Stellantrieb durch einen einfacher zu realisierenden Explosionsschutz aus. Das vergleichsweise kleine Kommunikationsloch kann mit einer entsprechend kleinen Sichtscheibe verschlossen werden, um den oftmals geforderten Explosionsschutzanforderungen zu genügen. So ist der Material- und letztendlich auch Kostenaufwand zur Bereitstellung des gewünschten Explosionsschutz bei dem erfindungsgemäßen Stellantrieb geringer als bei solchen Stellantrieben die vergleichsweise große Displays haben, ohne dass dadurch die mit dem Stellantrieb gebotene Funktionalität beeinträchtigt wäre.

Bei einer Ausführungsform des Stellantriebs ist hinter der Sichtscheibe in dem Stellantriebsgehäuse ein Bluetooth-Modul vorgesehen. Auf diese Weise ist eine störungsarme oder gar störungsfreie Kommunikation mit dem Bluetooth-Modul möglich, auch wenn das Stellantriebsgehäuse selbst aus einem Funksignale abschirmenden Material besteht.

Mit einem Kommunikationsloch von max. 30 mm Durchmesser, vorzugsweise von max. 25 mm Durchmesser ist ein zufriedenstellender Kompromiss zwischen Übertragbarkeit von Bluetooth-Signalen durch das Kommunikationsloch und dem gewünschten Explosionsschutz gefunden.

Um eine Kommunikation mit dem Bluetooth-Modul des Stellantriebs zu optimieren, kann es vorteilhaft sein, wenn das Bluetooth-Modul in einem Zentralfleck einer Projektion des Kommunikationslochs auf eine Leiterplatte mit dem Bluetooth-Modul angeordnet ist. Auf diese Weise wird sichergestellt, dass das Bluetooth-Modul möglichst im Zentrum des Kommunikationslochs angeordnet ist, sodass Bluetooth-Signale, die zwischen dem Bluetooth-Modul und einem Empfänger und/oder Sender ausgetauscht werden sollen, aus möglichst vielen Richtungen das Bluetooth-Modul zuverlässig erreichen können. Durch diese Maßnahme können die Sende- und Empfangsreichweite des innerhalb des Stellantriebsgehäuses befindlichen Bluetooth-Moduls maximiert werden.

Hierfür kann das Bluetooth-Modul beispielsweise in einem Abstand zwischen 0 mm und 15 mm, besonders bevorzugt in einem Abstand zwischen 5 mm und 10 mm zu dem zuvor erwähnten Zentralfleck und/oder zu dem Kommunikationsloch und/oder zu der Sichtscheibe, mit der das Kommunikationsloch verschlossen ist, angeordnet sein.

Die Verwendung einer LED als Status-Anzeigemittel des Stellantriebs ermöglicht es, diese bei einer Ausführungsform des Stellantriebs außerhalb des zuvor erwähnten Zentralflecks der Projektion des Kommunikationslochs auf die Leiterplatte mit dem Bluetooth-Modul anzuordnen. Auf diese Weise kann der im Bereich des Zentralflecks zur Verfügung stehende Bauraum für das Bluetooth-Modul und/oder eine Antenne des Bluetooth-Moduls verwendet werden. Ein von der LED abgegebenes Lichtsignal kann auch dann noch von einem Benutzer durch das Kommunikationsloch wahrgenommen werden, wenn die LED außerhalb des zuvor erwähnten Zentralflecks angeordnet ist.

Um die LED auch dann noch zuverlässig wahrnehmen zu können, wenn sie nicht unmittelbar hinter der Sichtscheibe angeordnet ist, kann es vorteilhaft sein, wenn die Sichtscheibe, mit der das Kommunikationsloch verschlossen ist, aus einem diffusen Materialbesteht. Durch das diffuse Material der Sichtscheibe kann das von der LED innerhalb des Stellantriebsgehäuses abgegebene Lichtsignal gestreut werden. So ist es weitgehend unabhängig von der Position der LED innerhalb des Stellantriebsgehäuses von außen wahrnehmbar.

Bei einer Ausführungsform des Stellantriebs ist vorgesehen, dass das Bluetooth-Modul in SMD-Technik auf einer, beispielsweise der bereits zuvor erwähnten, Leiterplatte angeordnet ist. Ferner kann eine integrierte Antenne des Bluetooth-Moduls in einem, beispielsweise den bereits zuvor erwähnten, Zentralfleck einer Projektion des Kommunikationslochs auf eine, beispielsweise die bereits zuvor erwähnte, Leiterplatte mit dem Bluetooth-Modul angeordnet sein. Durch eine im Zentralfleck angeordnete Antenne des Bluetooth-Moduls kann die Sendereichweite und die Empfangsreichweite des Bluetooth-moduls optimiert werden.

Ein Abstand des Bluetooth-Moduls von dem Kommunikationsloch kann kleiner als eine axiale Länge des Kommunikationslochs sein. Auch diese Maßnahme kann dazu beitragen, die vergleichsweise geringe Größe des Kommunikationslochs und die abschirmende Wirkung des Stellantriebsgehäuses zu kompensieren und dadurch eine Kommunikation mit dem Bluetooth-Modul hinter dem Kommunikationsloch zu vereinfachen.

Um über die LED Statusinformationen des Stellantriebs ausgeben zu können, kann es vorteilhaft sein, wenn der Stellantrieb eine Steuereinrichtung aufweist, die zum Auslesen und zur Verarbeitung von Statusmeldungen des Stellantriebs eingerichtet ist. Die Steuereinrichtung kann ferner dazu eingerichtet sein, die LED entsprechend der Statusmeldungen zur Ausgabe von Statusinformationen anzusteuern. Auf diese Weise können Statusinformationen des Stellantriebs über die LED ausgegeben werden. Die Verwendung eines vergleichsweise großen Displays zur Statusanzeige ist somit entbehrlich. Dies ist vorteilhaft vor dem Hintergrund der gewünschten Kompaktheit und des möglichst einfach zu realisierenden Explosionsschutzes des Stellantriebs, da ein Display einerseits mehr Bauraum und daher ein größeres Stellantriebsgehäuse und andererseits eine entsprechend große Gehäuseöffnung im Stellantriebsgehäuse erfordert, was die Explosionsschutzmaßnahmen, die am Stellantriebsgehäuse dann vorgesehen werden müssen, erschweren kann.

Bei sämtlichen der zuvor erwähnten Stellantriebe kann es vorteilhaft sein, den Stellbereich des Stellantriebs durch einen Endanschlag zu beschränken, um mit dem Stellantrieb zu bedienende Armaturen oder Ventile nicht durch den Stellantrieb zu beschädigen.

Vor allem dann, wenn die Stellantriebe Bewegungen, beispielsweise Stößen und/oder Vibrationen ausgesetzt sind, ist es wünschenswert, die als Endanschläge verwendeten Endanschlagsschrauben derartiger Stellantriebe mit Schraubensicherungen zu versehen.

Bisher ist es üblich, Kontermuttern als Schraubensicherungen einzusetzen. Insbesondere wenn nur geringer Bauraum zur Verfügung steht, ist die Handhabung derartiger Kontermuttern jedoch vergleichsweise schwierig. Aufgabe der Erfindung ist es, ein platzsparendes Konzept zur Schraubensicherung derartiger Endanschlagsschrauben bei Stellantrieben bereitzustellen und so einen Stellantrieb zu schaffen, der sich auch in kleinem Bauraum einfach integrieren lässt.

Zur Lösung der Aufgabe wird ein Stellantrieb mit den Merkmalen des Weiteren, auf einen derartigen Stellantrieb gerichteten unabhängigen Anspruchs vorgeschlagen. Insbesondere wird zur Lösung der Aufgabe somit ein Stellantrieb mit einem Stellantriebsgehäuse mit zumindest einer einstellbaren Endanschlagsschraube als Endanschlag für eine Stellbewegung des Stellantriebs vorgeschlagen, wobei die Endanschlagsschraube mit einer Schraubensicherung in Form einer Sicherungshülse kraftschlüssig gesichert ist.

Bei einer Ausführungsform des Stellantriebs ist vorgesehen, dass die Sicherungshülse in Sicherungsstellung zwischen einem Außenumfang eines Schraubenkopfs der Endanschlagsschraube und einer Innenumfangswandung eines Schraublochs des Stellantriebsgehäuses, in das die Endanschlagsschraube eingeschraubt ist, vorzugsweise unter Pressung, angeordnet ist. Die Sicherungshülse wird somit zwischen dem Außenumfang des Schraubenkopfes der Endanschlagsschraube und der Innenumfangswandung des Schraubenlochs für die Endanschlagsschraube, beispielsweise beim Anziehen der Endanschlagsschraube, eingequetscht und kann so verhindern, dass sich die Endanschlagsschraube durch Bewegungen, Stöße und/oder Vibrationen, die auf den Stellantrieb einwirken können, unbeabsichtigt löst, wodurch der Endanschlag für die Stellbewegung des Stellantriebs verstellt werden könnte.

Als Sicherungshülse können bei einer Ausführungsform des Stellantriebs ein Toleranzring und/oder eine Toleranzhülse verwendet werden, wie sie beispielsweise als kraftschlüssige und lösbare Verbindungselemente bei Welle-Nabe-Verbindungen vorbekannt sind.

Ein derartiger Toleranzring und/oder eine derartige Toleranzhülse kann beispielsweise aus einem geschlitzten Ring aus Federbandmaterial mit wellenartigen Ausprägungen hergestellt sein.

Zur Lösung der Aufgabe wird schließlich auch die Verwendung eines Toleranzrings und/oder einer Toleranzhülse, insbesondere einer Welle-Nabe-Verbindung, als Schraubensicherung für eine Endanschlagsschraube eines Stellantriebs, insbesondere eines Stellantriebs nach einem der auf einen Stellantrieb gerichteten Ansprüche vorgeschlagen.

Die Erfindung wird nun anhand von Ausführungsbeispielen näher erläutert, ist aber nicht auf diese Ausführungsbeispiele beschränkt. Weitere Ausführungsbeispiele ergeben sich durch Kombination der Merkmale einzelner oder mehrerer Schutzansprüche untereinander und/oder in Kombination einzelner oder mehrerer Merkmale des Ausführungsbeispiels.

Es zeigen in teilweise stark schematisierter Darstellung:
- Figur 1:: eine isometrische Darstellung eines Stellantriebs, dessen Stellantriebsgehäuse eine Stufe mit zumindest einer daran ausgebildeten Funktionsfläche aufweist,
- Figuren 2 bis 4:: unterschiedliche Ansichten des in Figur 1 gezeigten Stellantriebs,

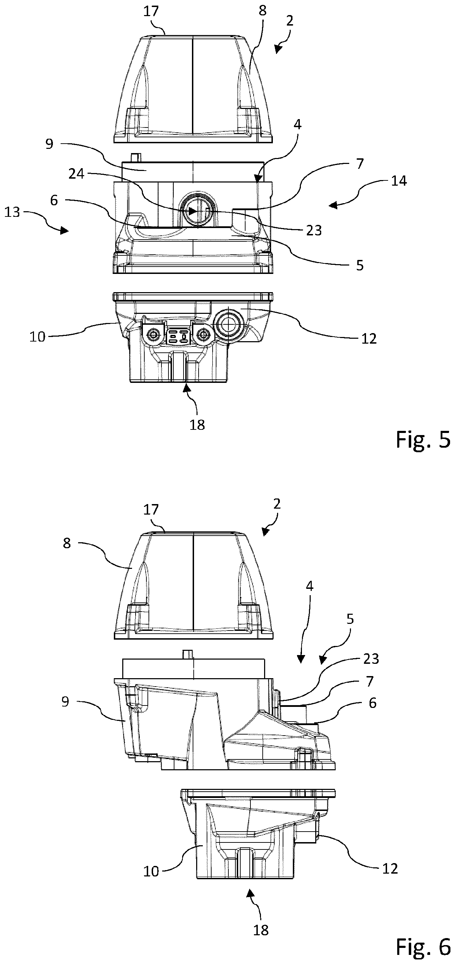

- Figur 5:: eine Explosionsdarstellung des Stellantriebsgehäuses des in den vorherigen Figuren dargestellten Stellantriebs in Vorderansicht, wobei hier gut ein Kommunikationsloch als Durchtrittsöffnung für Bluetooth-Signale zu erkennen ist,
- Figur 6:: eine Explosionsdarstellung des in den vorherigen Figuren gezeigten Stellantriebsgehäuses in Seitenansicht,
- Figur 7:: eine isometrische Ansicht des in den vorherigen Figuren dargestellten Stellantriebsgehäuses in Explosionsdarstellung,
- Figur 8:: eine Detailansicht des in den vorherigen Figuren abgebildeten Stellantriebsgehäuses mit dem Kommunikationsloch, hinter dem ein Bluetooth-Modul, eine Antenne und eine LED des Stellantriebs zu erkennen sind, sowie
- Figur 9:: eine teilausgebrochene Schnittdarstellung des in den Figuren 1 bis 4 sowie 8 gezeigten Stellantriebs zur Veranschaulichung einer Endanschlagsschraube sowie ihrer Schraubensicherung in Form einer Sicherungshülse.

Sämtliche Figuren zeigen zumindest Bestandteile eines im Ganzen mit 1 bezeichneten Stellantriebs. Der Stellantrieb 1 weist ein Stellantriebsgehäuse 2 auf, in dem ein Stellantriebsmotor 3 angeordnet ist. Das Stellantriebsgehäuse 2 weist zumindest eine Stufe 4 auf, an der eine Funktionsfläche 5 ausgebildet ist. An der Funktionsfläche 5 sind im gezeigten Ausführungsbeispiel des Stellantriebs 1 insgesamt zwei Zugänge 6 und 7 in das Stellantriebsgehäuse 2 ausgebildet.

Das Stellantriebsgehäuse 2 des Stellantriebs 1 umfasst drei Gehäuseteile 8, 9, 10, wobei die beiden äußeren Gehäuseteile 8 und 10 zur Ausbildung der Stufe 4 des Stellantriebsgehäuses 2 quer zu einer Rotationsachse des Stellantriebsmotors 3 versetzt zueinander angeordnet sind. Dabei kann der Versatz der beiden Gehäuseteile 8 und 10 zueinander als ursächlich für die Ausbildung der Stufe 4 einerseits und der Funktionsfläche 5 andererseits angesehen werden.

Die Funktionsfläche 5 ist an dem mittleren Gehäuseteil 9 des Stellantriebsgehäuses 2 ausgebildet und quer zu einer Richtung des Versatzes der beiden übrigen Gehäuseteile 8 und 10 zueinander ausgerichtet.

Versatz der beiden Gehäuseteile 8 und 10 zueinander bedeutet im vorliegenden Fall, dass Längsmittelachsen der Gebäudeteile 8 und 10 nicht deckungsgleich, sondern versetzt zueinander angeordnet sind.

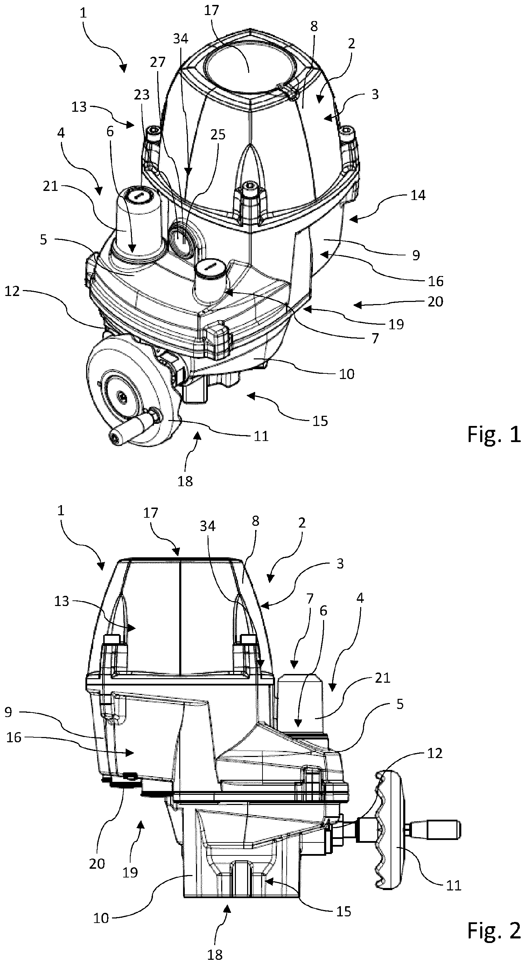

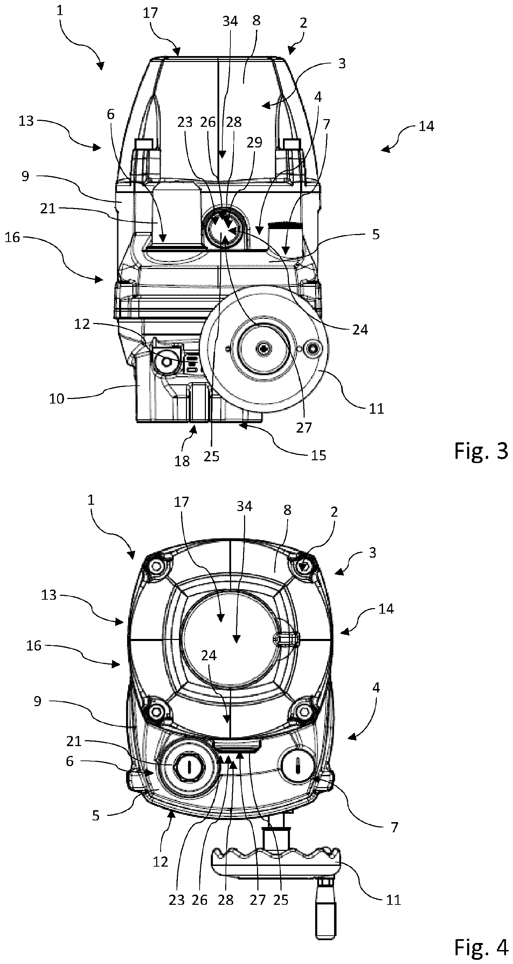

Die Figuren 1 bis 4 verdeutlichen, dass der Stellantrieb 1 ferner ein Handrad 11 aufweist, mit dem der Stellantrieb 1 bei Bedarf manuell betätigt werden kann. Das Handrad 11 ist exzentrisch an einer an dem unteren Gehäuseteil 10 des Stellantriebsgehäuses 2 ausgebildeten weiteren Funktionsfläche 12 angeordnet. Das Handrad 11 weist dabei einen Durchmesser auf, der kleiner ist als ein größter messbarer Abstand zwischen zwei sich gegenüberliegenden Außenseiten 13 und 14, zwischen denen ein Drehzentrum des Handrades 11 angeordnet ist. Figur 4 verdeutlicht, dass das Handrad 11 die rechte Außenseite 14 des Stellantriebsgehäuses 2 seitlich überragt und an einer Stirnseite oder Vorderseite des unteren Gehäuseteils 10 angeordnet ist.

Weder an der linken Außenseite 13 noch an der rechten Außenseite 14 sind Funktionselemente und/oder Zugänge in das Stellantriebsgehäuse 2 ausgebildet.

Der Stellantriebsmotor 3 des Stellantriebs 1 ist in dem oberen Gehäuseteil 8 und dem mittleren Gehäuseteil 9 des Stellantriebsgehäuses 2 angeordnet, wobei eine Stellantriebsausgangswelle 15 an dem dazu versetzten unteren Gehäuseteil 10 angeordnet ist.

Der Stellantriebsmotor 3 ist über ein Stellantriebsgetriebe 16 mit der Stellantriebsausgangswelle 15 verbunden. Dabei erstreckt sich das Stellantriebsgetriebe 16 zumindest teilweise innerhalb des mittleren Gehäuseteils 9 des Stellantriebsgehäuses 2 und verbindet damit den Stellantrieb 3 in dem obere Gehäuseteil 8 mit der Stellantriebsausgangswelle 15 in / an dem unteren Gehäuseteil 10.

Die an der Stufe 4 ausgebildete Funktionsfläche 5 ist zwischen einer Oberseite 17 und einer Unterseite 18 des Stellantriebsgehäuses 2 ausgebildet. Das Stellantriebsgehäuse 2 weist eine weitere Funktionsfläche 19 auf, die an einer Seite des Stellantriebsgehäuses 2 ausgebildet ist, die der zuvor erwähnten Oberseite 17 des Stellantriebsgehäuses 2 abgewandt ist. Diese weitere Funktionsfläche 19 befindet sich an einer unteren Rückseite des mittleren Gehäuseteils 9, ist also der Stufe 4 abgewandt. Auch diese weitere Funktionsfläche 19 am mittleren Gehäuseteil 9 des Stellantriebsgehäuses 2 wird letztendlich erst dadurch geschaffen, dass das obere Gehäuseteil 8 versetzt zu dem unteren Gehäuseteil 10 an dem mittleren Gehäuseteil 9 des Stellantriebsgehäuses 2 angeordnet ist.

Die Funktionsfläche 5 an der Stufe 4 des Stellantriebsgehäuses 2 und die weitere Funktionsfläche 19 sind einander abgewandt.

Die Funktionsfläche 5 kann zudem als Funktionsfläche bezeichnet werden, die an einer Seite des Stellantriebsgehäuse 3 angeordnet ist, die ihrerseits der Unterseite 18 des Stellantriebsgehäuses 2 abgewandt ist. An jeder der beiden Funktionsflächen 5 und 19 sind Zugänge in das Stellantriebsgehäuse 2 ausgebildet.

Als Zugang in das Stellantriebsgehäuse 2 ist unter anderem eine Durchführung 20 für einen elektrischen Anschluss des Stellantriebs 1 an der Funktionsfläche 19 vorhanden. Dabei ist die Funktionsfläche 19 in einer axialen Verlängerung des Stellantriebsmotors 3 und unterhalb des Stellantriebsmotors 3 angeordnet.

Die an der Stufe 4 ausgebildete Funktionsfläche 5 ist in einer axialen Verlängerung der Stellantriebsausgangswelle 15 angeordnet. An ihr ist unter anderem eine Anzeige 21 des Stellantriebs 1 in Form einer Stellungsanzeige ausgebildet.

Das Stellantriebsgehäuse 2 des Stellantriebs 1 weist außerdem ein Kommunikationsloch 23 als Durchtrittsöffnung für Bluetooth-Signale auf, die zur Bedienung des Stellantriebs 1 mit einem Bluetooth-Modul 27 des Stellantriebs 1 ausgetauscht werden sollen.

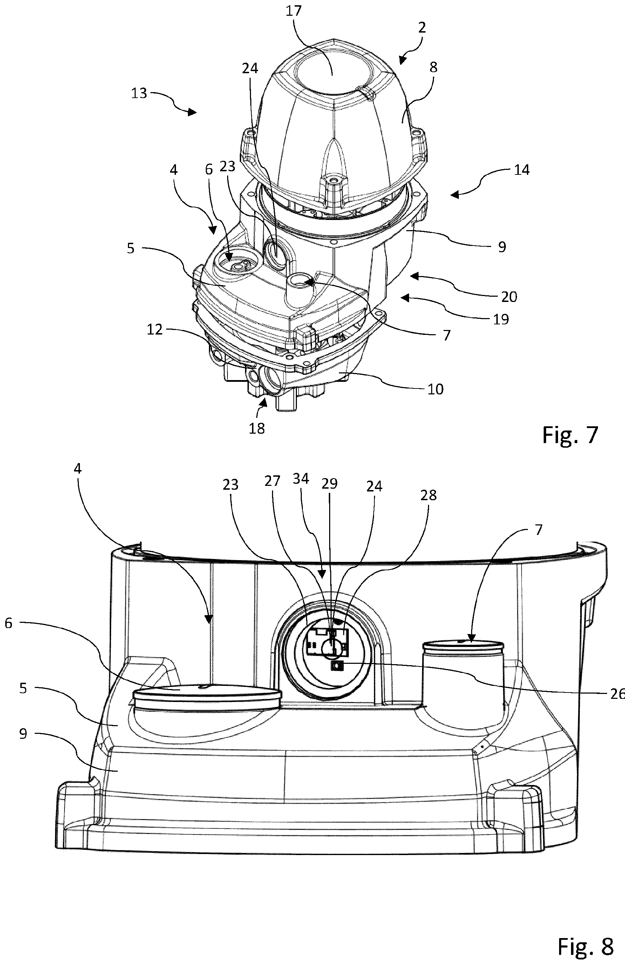

Das Kommunikationsloch 23 weist einen maximalen Durchmesser von 30 mm, vorzugsweise von 25 mm auf und ist mit einer Sichtscheibe 25 verschlossen. In dem Stellantriebsgehäuse 2 ist ferner eine LED 26 angeordnet, deren LED-Signal durch die Sichtscheibe 25 hindurch wahrnehmbar ist. Innerhalb des Stellantriebsgehäuses 2 und hinter der Sichtscheibe 25 ist das zuvor bereits erwähnte Bluetooth-Modul 27 des Stellantriebs 1 angeordnet. Das Bluetooth-Modul 27 befindet sich in einem Zentralfleck 24 einer Projektion des Kommunikationslochs 23 auf eine Leiterplatte 28 mit dem Bluetooth-Modul 27. Dies ist besonders gut aus der Darstellung gemäß Figur 8 ersichtlich.

Der Abstand des Bluetooth-Moduls 27 zu dem Kommunikationsloch 23 beträgt dabei zwischen 0 mm und 15 mm, vorzugsweise zwischen 5 mm und 10 mm. Die LED 26 ist außerhalb des Zentralflecks 24 der Projektion des Kommunikationslochs 23 auf die Leiterplatte 28 angeordnet. Die Sichtscheibe 25 besteht aus einem diffusen Material, wodurch die LED 26 und ihr LED-Signal auch dann noch leicht wahrgenommen werden können, wenn die LED 26 außerhalb des Zentralflecks 24 der Projektion des Kommunikationslochs 23 auf die Leiterplatte 28 angeordnet ist. Die Sichtscheibe 25 ist vorzugsweise aus Kunststoff hergestellt.

Das Bluetooth-Modul 27 ist in SMD-Technik auf der Leiterplatte 28 angeordnet. Es umfasst ferner eine integrierte Antenne 29, die in dem Zentralfleck 24 der Projektion des Kommunikationslochs 23 auf die Leiterplatte 28 mit dem Bluetooth-Modul 27 angeordnet ist. Dies begünstigt eine Kommunikation mit dem Bluetooth-Modul 27 via Bluetooth. Der Abstand des Bluetooth-Moduls 27 zu dem Kommunikationsloch 23 ist dabei kleiner als eine axiale Länge des Kommunikationslochs 23 gewählt.

Der Stellantrieb 1 umfasst ferner eine Steuereinrichtung 34. Die Steuereinrichtung 34 ist dazu eingerichtet, von Statusmeldungen, die den Stellantrieb 1 betreffen, auszulesen und zu verarbeiten. Zur Ausgabe von entsprechenden Statusinformationen an einen Benutzer des Stellantriebs 1 kann die LED 26 mit der Steuereinrichtung 34 entsprechend angesteuert werden. So ist es vorstellbar, dass die LED 26 ein grünes Lichtsignal abgibt, wenn sich der Stellantrieb 1 in einem betriebsbereiten Zustand befindet. Wenn eine Störung des Stellantriebs vorliegt, kann die LED 26 mit der Steuereinrichtung 34 zum Beispiel so angesteuert werden, dass sie blinkt und/oder ein andersfarbiges, beispielsweise ein rotes Lichtsignal ausgibt.

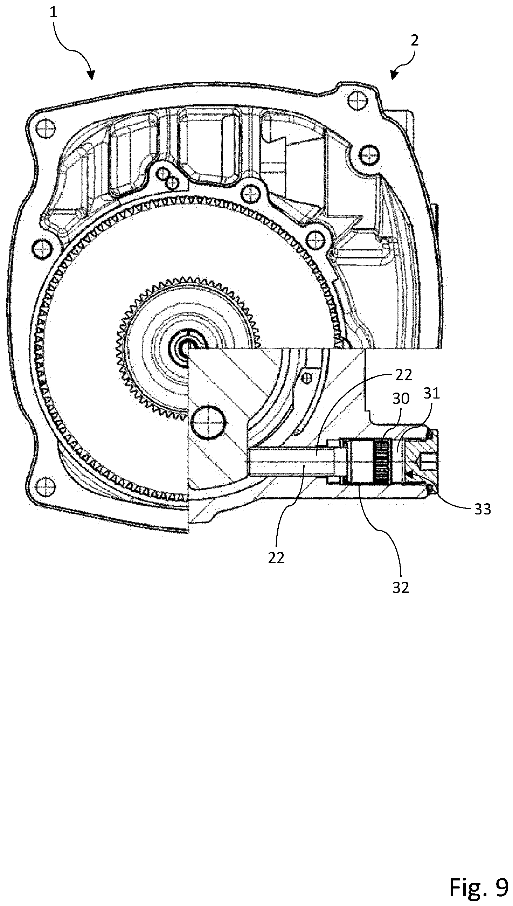

Figur 9 zeigt eine bereits zuvor erwähnte Endanschlagsschraube 22, die als Endanschlag für eine Stellbewegung des Stellantriebs 1 dient und entsprechend einstellbar ist. Die Endanschlagsschraube 22 ist mit einer Schraubensicherung in Form einer Sicherungshülse 30 kraftschlüssig gesichert. Die Sicherungshülse 30 ist in ihrer in Figur 8 gezeigten Sicherungsstellung zwischen einem Außenumfang eines Schraubenkopfs 31 der Endanschlagsschraube 22 und einer Innenumfangswandung 32 eines Schraubenlochs 33 des Stellantriebsgehäuses 2, in das die Endanschlagsschraube 22 eingeschraubt ist unter Pressung angeordnet.

Als Sicherungshülse 30 wird ein Toleranzring bzw. eine Toleranzhülse verwendet, wie sie insbesondere bei Welle-Nabe-Verbindungen zum Einsatz kommen.

Die Erfindung befasst sich mit Verbesserungen auf dem technischen Gebiet der Stellantriebe. Hierzu wird unter anderem der Stellantrieb 1 vorgeschlagen, dessen Stellantriebsgehäuse 2 zumindest eine Stufe 4 aufweist, an der wenigstens eine Funktionsfläche 5 mit wenigstens einem Zugang 6, 7 in das Stellantriebsgehäuse 2 ausgebildet ist.

### Bezugszeichenliste

- 1: Stellantrieb
- 2: Stellantriebsgehäuse
- 3: Stellantriebsmotor
- 4: Stufe
- 5: Funktionsfläche an 4
- 6: Zugang
- 7: Zugang
- 8: oberes Gehäuseteil
- 9: mittleres Gehäuseteil
- 10: unteres Gehäuseteil
- 11: Handrad
- 12: Funktionsfläche an 10
- 13: linke Außenseite von 2
- 14: rechte Außenseite von 2
- 15: Stellantriebsausgangswelle
- 16: Stellantriebsgetriebe
- 17: Oberseite von 2
- 18: Unterseite von 2
- 19: weitere Funktionsfläche an 9
- 20: Durchführung an 19
- 21: Anzeige
- 22: Endanschlagschraube
- 23: Kommunikationsloch
- 24: Zentralfleck
- 25: Sichtscheibe
- 26: LED
- 27: Bluetooth-Modul
- 28: Leiterplatte
- 29: Antenne von 27
- 30: Sicherungshülse
- 31: Schraubenkopf
- 32: Innenumfangswandung
- 33: Schraubloch
- 34: Steuereinrichtung

## Patentansprüche

1. Stellantrieb (1) mit einem Stellantriebsgehäuse (2), in dem ein Stellantriebsmotor (3) angeordnet ist, wobei das Stellantriebsgehäuse (2) zumindest eine Stufe (4) mit zumindest einer Funktionsfläche (5) aufweist, an der zumindest ein Zugang (6, 7) in das Stellantriebsgehäuse (2) ausbildbar und/oder ausgebildet ist.

2. Stellantrieb (1) nach Anspruch 1, wobei das Stellantriebsgehäuse (2) zumindest zwei Gehäuseteile (8, 9, 10) umfasst, die zur Ausbildung der zumindest einen Stufe (4), insbesondere quer zu einer Rotationsachse des Stellantriebsmotors (3), versetzt zueinander angeordnet sind.

3. Stellantrieb (1) nach Anspruch 2, wobei zumindest eine Funktionsfläche (5) quer, insbesondere rechtwinklig, zu einer Richtung des Versatzes ausgerichtet ist und/oder wobei zumindest eine Funktionsfläche (5) in einer Richtung des Versatzes ausgerichtet ist.

4. Stellantrieb (1), insbesondere nach einem der vorherigen Ansprüche, wobei der Stellantrieb (1) ein Handrad (11) aufweist, das, vorzugsweise exzentrisch, an einer oder der zumindest einen Funktionsfläche (12) eines Stellantriebsgehäuses (2) angeordnet ist, wobei das Handrad (11) einen Durchmesser aufweist, der höchstens so groß, vorzugsweise kleiner als, ein größter messbarer Abstand zwischen zwei sich gegenüberliegenden Außenseiten (13, 14) ist, zwischen denen ein Drehzentrum des Handrades (11) angeordnet ist, insbesondere wobei das Handrad eine der Außenseiten (13, 14) überragt.

5. Stellantrieb (1) nach einem der vorherigen Ansprüche, wobei der Stellantriebsmotor (3) in einem von zumindest zwei Gehäuseteilen (8, 9) des Stellantriebsgehäuses (2) angeordnet ist und/oder wobei eine Stellantriebsausgangswelle (15) an einem dazu versetzten Gehäuseteil (10) angeordnet ist.

6. Stellantrieb (1) nach Anspruch 5, wobei der Stellantriebsmotor (3) über ein Stellantriebsgetriebe (16) mit der Stellantriebsausgangswelle (15) verbunden ist, vorzugsweise wobei sich das Stellantriebsgetriebe (15) von dem Gehäuseteil (8) mit dem Stellantriebsmotor (3) bis zu dem Gehäuseteil (10) mit der Stellantriebsausgangswelle (15) erstreckt.

7. Stellantrieb (1) nach einem der vorherigen Ansprüche, wobei zumindest eine Funktionsfläche (5) der zumindest einen Funktionsfläche (19) zwischen einer Oberseite (17) und einer Unterseite (18) des Stellantriebsgehäuses (2) ausgebildet ist.

8. Stellantrieb (1) nach einem der vorherigen Ansprüche, wobei eine Funktionsfläche (19) der zumindest einen Funktionsfläche an einer Seite des Stellantriebsgehäuses (2), die einer Oberseite (17) des Stellantriebsgehäuses (2) abgewandt ist, ausgebildet ist, vorzugsweise mit wenigstens einer Durchführung (20) für einen elektrischen Anschluss, und/oder wobei eine Funktionsfläche (5) der zumindest einen Funktionsfläche (19) an einer Seite des Stellantriebsgehäuses (2), die einer Unterseite (18) des Stellantriebsgehäuses (2) abgewandt ist, ausgebildet ist, vorzugsweise mit wenigstens einer Durchführung (20) für einen elektrischen Anschluss, und/oder wobei eine Funktionsfläche (5) der zumindest einen Funktionsfläche (19) an einer Seite des Stellantriebsgehäuses (2) ausgebildet ist, die einer Seite des Stellantriebsgehäuses (2), aus der eine oder die Stellantriebsausgangswelle (15) austritt, abgewandt ist und/oder die in einer axialen Verlängerung der Stellantriebsausgangswelle (15) angeordnet ist, vorzugsweise mit wenigstens einer Anzeige (21) und/oder wenigstens einer Endanschlagschraube (22) und/oder wenigstens einem Bedienelement ausgebildet ist, und/oder wobei eine Funktionsfläche (19) in einer axialen Verlängerung des Stellantriebsmotors (3) angeordnet ist.

9. Stellantrieb (1), insbesondere nach einem der vorherigen Ansprüche, mit einem Stellantriebsgehäuse (2) mit zumindest einem Kommunikationsloch (23) als Durchtrittsöffnung für Bluetooth-Signale (24), wobei das Kommunikationsloch einen maximalen Durchmesser von 30 mm, vorzugsweise von 25 mm, aufweist und mit einer Sichtscheibe (25) verschlossen ist, und wobei in dem Stellantriebsgehäuse (2) eine LED (26) angeordnet ist, deren LED-Signal durch die Sichtscheibe (25) hindurch wahrnehmbar ist.

10. Stellantrieb (1) nach Anspruch 9, wobei in dem Stellantriebsgehäuse (2) hinter der Sichtscheibe (25) ein Bluetooth-Modul (27) vorgesehen ist.

11. Stellantrieb (1) nach Anspruch 10, wobei das Bluetooth-Modul (27) in einem Zentralfleck (24) einer Projektion des Kommunikationslochs (23) auf eine Leiterplatte (28) mit dem Bluetooth-Modul (27) angeordnet ist, insbesondere in einem Abstand zwischen 0 mm und 15 mm, besonders bevorzugt in einem Abstand zwischen 5 mm und 10 mm.

12. Stellantrieb (1) nach Anspruch 11, wobei die LED (26) außerhalb des Zentralflecks (24) der Projektion angeordnet ist.

13. Stellantrieb (1) nach einem der Ansprüche 9 bis 12, wobei die Sichtscheibe (25) aus einem diffusen Material, insbesondere aus Kunststoff, besteht.

14. Stellantrieb (2) nach einem der Ansprüche 9 bis 13, wobei das Bluetooth-Modul (27) in SMD-Technik auf der oder einer Leiterplatte (28) angeordnet ist und/oder eine integrierte Antenne (29) des Bluetooth-Moduls (27) in dem oder einen Zentralfleck einer Projektion des Kommunikationslochs auf die oder eine Leiterplatte mit dem Bluetooth-Modul (27) angeordnet ist.

15. Stellantrieb (1) nach einem der Ansprüche 9 bis 14, **dadurch gekennzeichnet, dass** ein Abstand des Bluetooth-Moduls (27) von dem Kommunikationsloch (23) kleiner als eine axiale Länge des Kommunikationslochs (23) gewählt ist.

16. Stellantrieb (1) nach einem der Ansprüche 9 bis 15, **dadurch gekennzeichnet, dass** der Stellantrieb (1) eine Steuereinrichtung (34) aufweist, die zum Auslesen und zur Verarbeitung von Statusmeldungen des Stellantriebs (1) eingerichtet ist, wobei die LED (26) mit der Steuereinrichtung (34) zur Ausgabe von Statusinformationen ansteuerbar ist.

17. Stellantrieb (1), insbesondere nach einem der vorherigen Ansprüche, mit einem Stellantriebsgehäuse (2) mit zumindest einer einstellbaren Endanschlagschraube (22) als Endanschlag für eine Stellbewegung des Stellantriebs (1), wobei die Endanschlagschraube (22) mit einer Schraubensicherung in Form einer Sicherungshülse (30) kraftschlüssig gesichert ist.

18. Stellantrieb (1) nach Anspruch 16, wobei die Sicherungshülse (30) in Sicherungsstellung zwischen einem Außenumfang eines Schraubenkopfs (31) der Endanschlagschraube (22) und einer Innenumfangswandung 32 eines Schraublochs (33) des Stellantriebsgehäuses (2), in das die Endanschlagschraube (22) eingeschraubt ist, vorzugsweise unter Pressung, angeordnet ist.

19. Stellantrieb (1) nach Anspruch 17 oder 18, wobei die Sicherungshülse (30) ein Toleranzring und/oder eine Toleranzhülse, insbesondere einer Welle-Nabe-Verbindung, ist.

20. Verwendung eines Toleranzrings und/oder einer Toleranzhülse als Schraubensicherung für eine Endanschlagschraube eines Stellantriebs, insbesondere nach einem der Ansprüche 1 bis 19.
